(19) Europäisches Patentamt
European Patent Office
Office européen des brevets

(11) EP 2 717 352 A1

## (12) EUROPEAN PATENT APPLICATION
published in accordance with Art. 153(4) EPC

(43) Date of publication:
09.04.2014 Bulletin 2014/15

(21) Application number: 12788715.6

(22) Date of filing: 25.05.2012

(51) Int Cl.:
H01M 4/04 (2006.01)    H01M 4/66 (2006.01)
C08L 23/06 (2006.01)    C08L 23/12 (2006.01)
C08L 27/06 (2006.01)

(86) International application number:
PCT/CN2012/076036

(87) International publication number:
WO 2012/159582 (29.11.2012 Gazette 2012/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 25.05.2011 CN 201110136860

(71) Applicant: Shenzhen Jinfan Power Co., Ltd.
Shenzhen, Guangdong 518052 (CN)

(72) Inventor: ZHENG, Dongdong
Shenzhen, Guangdong 518052 (CN)

(74) Representative: Gulde Hengelhaupt Ziebig &
Schneider
Patentanwälte - Rechtsanwälte
Wallstraße 58/59
D-10179 Berlin (DE)

## (54) COMPOSITE CONDUCTIVE ELECTRODE AND MANUFACTURING METHOD THEREOF

(57) The present disclosure relates to a composite conductive electrode and a manufacturing method thereof, belonging to the field of vanadium battery manufacturing. The method comprises: selecting a carbon felt as a conductive substrate, selecting a conductive resin as the connecting substance for spaces in the carbon felt so as to enhance the conductive properties of the carbon felt; the conductive resin comprises a conductive plastic material or an epoxy resin. The composite conductive electrode manufactured according to the solution has remarkably improved conductive properties, has a dense electrode structure, and is not easy to deform, thereby greatly prolonging the service life of the conductive electrode under stable conditions.

Select a carbon felt as conductive substrate

↓

Select a conductive medium as connecting substance for spaces in the carbon felt

Figure 1

**Description**

FIELD OF TECHNOLOGY

The present disclosure relates to a conductive electrode for a battery and a manufacturing method thereof, particularly a composite conductive electrode and a manufacturing method thereof, and belongs to the field of vanadium battery manufacturing.

BACKGROUND OF THE TECHNOLOGY

Currently electrode materials in vanadium batteries mainly consist of non-metallic electrode plates such as plastic plates or graphite plates.

It is discovered in practice that non-metallic electrode plates have poor conduction stability during operation, and frequently exhibit signs of breakage. Temperature of a non-metallic electrode rises when the electrode has been in operation for a long period of time. With the rising temperature, the electrode's electrical resistance tends to dramatically increase at around a threshold, causing the electrode to deform and affecting the normal operation of the non-metallic electrode. Specific problems with plastic electrode plates include poor mechanical performance and poor electrical performance. Graphite plates also have problems: graphite plates peel and deform easily, have a service life of only two years, lack longevity, and are electrically unstable.

Composite electrode plates commonly used in vanadium batteries for redox flow are generally required to possess superior conductivity and low volume electrical resistivity, as well as superior mechanical properties and stable temperature responses. For example, after prolonged operation, especially when the temperature is elevated, the electrode plate should still maintain a stable structure during continued operation. Namely the electrode plate should have superior tolerance to deformation and resist deformation, and should retain its capability to effectively isolate solutions of different properties on two sides of the electrode plate.

Published Chinese patent application with application number 2008103034837 discloses a composite electrode and a method of manufacturing thereof for use in an all-vanadium redox flow battery. The patent application describes adding multiple conductive fillers to a high polymer material to produce a thermoplastic conductive sheet, then pressing the thermoplastic conductive sheet and a graphite felt (carbon felt) into a composite body under heat and pressure, causing some of the conductive carbon fibers of the graphite felt to become embedded into the surface of the conductive sheet, forming an interconnecting conductive network, thereby enhancing the conductive properties of the product as a whole.

There are several shortcomings with the previously described composite electrode and its manufacturing method. First, it is very difficult in reality to achieve the required volume electrical resistivity of $\leq 0.1\ \Omega \cdot$ cm. The reason is that the conductive filler content such as conductive carbon fibers in the final product is still relatively small. In addition, the mechanical structure of the heat and pressure formed composite conductive plate is unstable, and after prolonged operation of the battery the conductive carbon fibers tend to break, causing the composite electrode plate to exhibit impaired temperature responses.

SUMMARY

In order to overcome the technological shortcomings of the presently known non-metallic electrode plate, namely its inferior conduction stability during operation, and its tendency to break and to deform, the present disclosure discloses a method for manufacturing a composite conductive electrode.

In order to overcome the technological shortcomings of the presently known non-metallic electrode plate, namely its inferior conduction stability during operation, and its tendency to break and to deform, the present disclosure further provides a composite conductive electrode.

The present disclosure provides a method for manufacturing a composite conductive electrode. The method comprises: selecting a carbon felt as a conductive substrate, selecting a conductive medium as a connecting substance for spaces in the carbon felt so as to enhance conductive properties of the carbon felt.

According to a preferred embodiment of the present disclosure, the method comprises: selecting the carbon felt as a conductive substrate, selecting a conductive resin as the connecting substance for spaces in the carbon felt so as to enhance the conductive properties of the carbon felt; the conductive resin comprises a conductive plastic material or an epoxy resin.

According to a first embodiment of the present disclosure, the method comprises:

A1: forming a conductive plastic sheet by mixing a plastic material and a conductive agent;
B1: placing the conductive plastic sheet into a mold, heating the conductive plastic sheet to a temperature of 50°C to 250°C;

C1: placing a first carbon felt on the conductive plastic sheet, heating the conductive plastic sheet and the first carbon felt to a temperature of 50°C to 250°C;

D1: while maintaining temperature at around 50°C to 250°C, applying pressure to the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying removing a composite body formed by the conductive plastic and the first carbon felt;

E1: trimming flat a surface of the composite body;

F1: pressing a second carbon felt into the composite body formed by the conductive plastic and the first carbon felt by pressing one piece of the second carbon felt into a top surface of the composite body and one piece of the second carbon felt into a bottom surface of the composite body, causing the two pieces of the second carbon felt and the composite body to form an integrated structure;

G1: cooling the integrated structure to obtain the composite conductive electrode.

According to a preferred embodiment of the first embodiment of the present disclosure, step A1 comprises thoroughly mixing the plastic material and the conductive agent forming a mixture, wherein the conductive agent is 5% to 40% of the mixture by weight,

the plastic material comprises one or more of PE plastic pellets, PP plastic pellets or PVC plastic pellets, proportion of each plastic material can be any ratio when selecting a combination of two or more plastic materials;

the conductive agent comprises one or more of conductive carbon black, carbon nanotubes, graphite powder or acetylene black, proportion of each conductive agent can be any ratio when selecting a combination of two or more conductive agents;

the conductive plastic sheet is formed by die-casting or injection molding;

step C1 comprises placing a first carbon felt of equal size as the conductive plastic sheet on top of the conductive plastic sheet;

in step D1 the pressure applied is 1 mpa to 4 mpa using a press adapted for applying flat pressure, while maintaining constant pressure, turning over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying removing a composite body formed by the conductive plastic and the first carbon felt;

step E1 comprises using a cutting machine or engraving machine to trim flat a top surface and a bottom surface of the composite body, trimming depth is 0.1 mm to 1 mm;

step F1 comprises pressing two pieces of a second carbon felt each having a thickness of 2 mm to 22 mm into the composite body by pressing one piece of the second carbon felt into the top surface of the composite body and one piece of the second carbon felt into the bottom surface of the composite body, causing the two pieces of the second carbon felt and the composite body to form an integrated structure.

The present disclosure further provides a composite conductive electrode manufactured according to the method of the first embodiment, the composite conductive electrode comprises: a composite body formed by a conductive plastic and a first carbon felt, and two pieces of a second carbon felt, wherein, each piece of the second carbon felt is pressed into the composite body, forming an integrated structure with the composite body.

According to a second embodiment of the present disclosure, the method comprises:

A2: overlaying two pieces of a first carbon felt, placing the two overlaid pieces of the first carbon felt into a mold, heating the two overlaid pieces of the first carbon felt to a temperature of 50°C to 250°C;

B2: applying pressure to the two overlaid pieces of the first carbon felt;

C2: thoroughly mixing a plastic material and a conductive agent forming a mixture, heating the mixture to a temperature of 50°C to 250°C;

D2: casting the mixture onto the two overlaid pieces of the first carbon felt, causing the mixture to evenly impregnate the two overlaid pieces of the first carbon felt;

E2: cooling the two overlaid pieces of the first carbon felt impregnated with the mixture;

F2: trimming flat a surface of a cooled composite body formed by the two overlaid pieces of the first carbon felt impregnated with the mixture, obtaining the composite conductive electrode.

According to a preferred embodiment of the second embodiment of the present disclosure, in step B2 the pressure applied is 1 mpa to 4 mpa;

in step C2 the conductive agent is 5 % to 40 % of the mixture by weight,

the plastic material comprises one or more of PE plastic pellets, PP plastic pellets or PVC plastic pellets, proportion of each plastic material can be any ratio when selecting a combination of two or more plastic materials;

the conductive agent comprises one or more of conductive carbon black, carbon nanotubes, graphite powder or acetylene black, proportion of each conductive agent can be any ratio when selecting a combination of two or more conductive agents;

step F2 comprises using a cutting machine or engraving machine to trim flat six surfaces of the composite body formed by the two overlaid pieces of the first carbon felt impregnated with the mixture, trimming depth is 0.1 mm to 1 mm.

The present disclosure further provides a composite conductive electrode manufactured according to the method of the second embodiment, the composite conductive electrode comprises: a mixture of a plastic material and a conductive agent, and two overlaid pieces of a first carbon felt, wherein, the mixture evenly impregnates the two overlaid pieces of the first carbon felt, the mixture and the two overlaid pieces of the first carbon felt form an integrated structure.

According to a third embodiment of the present disclosure, the method comprises:

A3: placing a first carbon felt into a mold;

B3: mixing an epoxy resin with a hardener forming a mixture, casting the mixture into the mold containing the first carbon felt, causing the mixture to evenly impregnate the first carbon felt;

C3: removing a composite body after the mixture and the first carbon felt have solidified into an integrated structure;

D3: trimming flat a surface of the composite body formed by the first carbon felt impregnated with the mixture, obtaining the composite conductive electrode.

According to a preferred embodiment of the third embodiment of the present disclosure,

step A3 further comprises applying pressure to the first carbon felt in the mold, the pressure being applied is 1 mpa to 4 mpa; in step B3 the hardener is an acidic curing agent, and the proportional weight of the hardener in the mixture is calculated according to the following formula: Amine Dosage = MG/Hn, where M=Amine molecular weight; Hn=Number of active hydrogens; G=Epoxide number (epoxide equivalents per 1000 grams of epoxy resin). When anhydrides is used the proportional weight of the hardener in the mixture is calculate according to the following formula: Anhydride Dosage = MG (0.6~1)/100, where M=Anhydride molecular weight; G=Epoxy number (0.6 to 1) which is an experimental coefficient;

step D3 further comprises using a cutting machine or engraving machine to trim flat six surfaces of the composite body formed by the first carbon felt impregnated with the mixture; trimming depth is 0.1 mm to 1 mm.

The present disclosure further provides a composite conductive electrode manufactured according to the method of the third embodiment, the composite conductive electrode comprises: a mixture of an epoxy resin and a hardener, and a first carbon felt, wherein, the mixture evenly impregnates the first carbon felt; the mixture and the first carbon felt form an integrated structure.

The composite conductive electrode manufactured according to the aforementioned methods has remarkably improved conductive properties, has a dense electrode structure, and has superior thermoplastic properties and temperature responses. In addition, the manufacturing process is simple and the production cost is low. Even after prolonged operation, the conductive electrode manufactured according to the methods of the present disclosure still maintains stable conductive properties and has reduced incidents of carbon fiber breakage. The carbon felt inside the conductive plate in the conductive electrode is significantly less porous and is not easy to deform, thereby greatly prolonging the service life of the conductive electrode under stable conditions.

BRIEF DESCRIPTION OF THE DRAWINGS

Figure 1 is a flow chart of a method for manufacturing a composite conductive electrode according to the present disclosure;

Figure 2 is a flow chart of a method for manufacturing a composite conductive electrode according to a first embodiment the present disclosure;

Figure 3 is a flow chart of a method for manufacturing a composite conductive electrode according to a second embodiment the present disclosure; and

Figure 4 is a flow chart of a method for manufacturing a composite conductive electrode according to a third embodiment the present disclosure.

DETAILED DESCRIPTION

The following, together with the drawings and examples, provides a detailed description of the present disclosure.

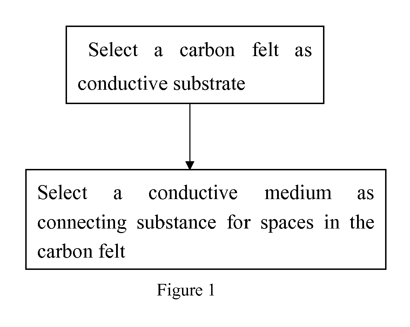

Figure 1 is a flow chart of a method for manufacturing a composite conductive electrode according to the present disclosure.

As shown in Figure 1, the method comprises: selecting a carbon felt as a conductive substrate, selecting a conductive medium as a connecting substance for spaces in the carbon felt so as to enhance conductive properties of the carbon felt. According to a preferred embodiment of the present disclosure, the method for manufacturing a composite conductive electrode comprises: selecting a carbon felt as a conductive substrate, selecting a conductive resin as a connecting substance for spaces in the carbon felt so as to enhance conductive properties of the carbon felt; the conductive resin comprises a conductive plastic material or an epoxy resin.

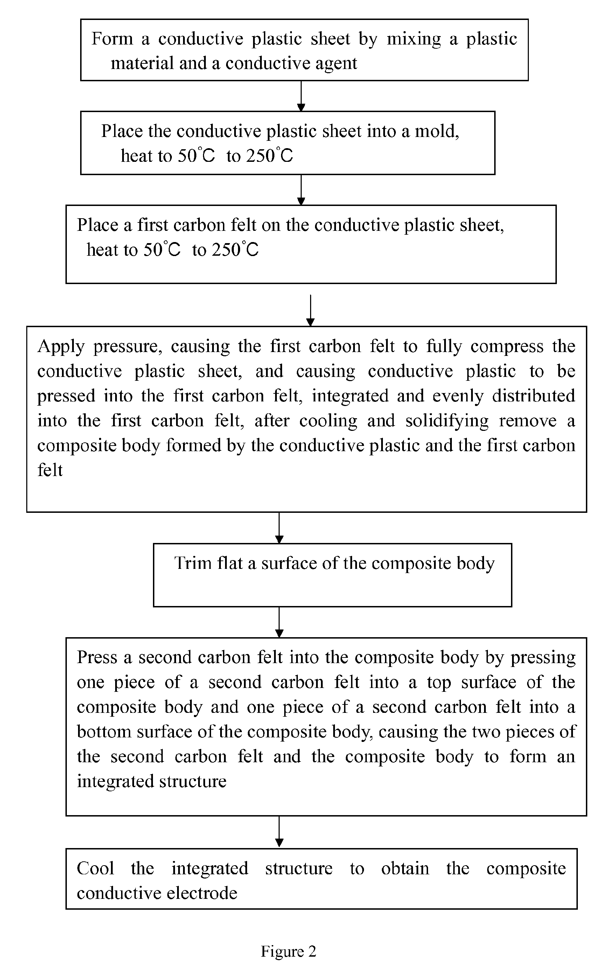

Figure 2 is a flow chart of a method for manufacturing a composite conductive electrode according to a first embodiment the present disclosure. As shown in Figure 2, the method comprises:

A1: forming a conductive plastic sheet by mixing a plastic material and a conductive agent;

B1: placing the conductive plastic sheet into a mold, heating the conductive plastic sheet to a temperature of 50°C to 250°C;

C1: placing the first carbon felt on the conductive plastic sheet, heating the conductive plastic sheet and the first carbon felt to a temperature of 50°C to 250°C;

D1: while maintaining temperature at around 50°C to 250°C, applying pressure to the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying removing a composite body formed by the conductive plastic and the first carbon felt;

E1: trimming flat a surface of the composite body;

F1: pressing a second carbon felt into the composite body by pressing one piece of a second carbon felt into a top surface of the composite body and one piece of a second carbon felt into a bottom surface of the composite body, causing the two pieces of the second carbon felt and the composite body to form an integrated structure;

G1: cooling the integrated structure to obtain the composite conductive electrode.

According to a preferred embodiment of the first embodiment of the present disclosure: step A1 comprises thoroughly mixing the plastic material and the conductive agent forming a mixture, wherein the conductive agent is 5 % to 40 % of the mixture by weight,

the plastic material comprises one or more of PE plastic pellets, PP plastic pellets or PVC plastic pellets, proportion of each plastic material can be any ratio when selecting a combination of two or more plastic materials;

the conductive agent comprises one or more of conductive carbon black, carbon nanotubes, graphite powder or acetylene black, proportion of each conductive agent can be any ratio when selecting a combination of two or more conductive agents;

the conductive plastic sheet is formed by die-casting or injection molding;

step C1 comprises placing a first carbon felt of equal size as the conductive plastic sheet on top of the conductive plastic sheet;

in step D1 the pressure applied is 1 mpa to 4 mpa using a press adapted for applying flat pressure, while maintaining constant pressure, turning over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying removing a composite body formed by the conductive plastic and the first carbon felt;

step E1 comprises using a cutting machine or engraving machine to trim flat a top surface and a bottom surface of the composite body, trimming depth is 0.1 mm to 1 mm;

step F1 comprises pressing two pieces of a second carbon felt each having a thickness of 2 mm to 22 mm into the composite body by pressing one piece of the second carbon felt into the top surface of the composite body and one piece of the second carbon felt into the bottom surface of the composite body, causing the two pieces of the second carbon felt and the composite body to form an integrated structure.

The present disclosure further provides a composite conductive electrode manufactured according to the method of the first embodiment, the composite conductive electrode comprises: a composite body formed by a conductive plastic and a first carbon felt, and two pieces of a second carbon felt, wherein, each piece of the second carbon felt is pressed into the composite body, forming an integrated structure with the composite body.

Example 1:

A1: Thoroughly mix a plastic material (the plastic material selected is PE plastic pellets) and a conductive agent (the conductive agent selected is conductive carbon black), the conductive agent is 5% of the mixture by weight, form the mixture into a conductive plastic sheet;

B1: place the conductive plastic sheet into a mold, heat the conductive plastic sheet to 50°C;

C1: place a first carbon felt of equal size as the conductive plastic sheet on top of the conductive plastic sheet, heat the conductive plastic sheet and the first carbon felt to 50°C;

D1: while maintaining temperature at around 50°C, apply pressure to the conductive plastic sheet and the first carbon felt, the pressure applied is 4 mpa. While maintaining constant pressure, turn over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying remove a composite body formed by the conductive plastic and the first carbon felt;

E1: use an engraving machine to trim flat a top surface and a bottom surface of the composite body, trimming depth is 1 mm;

F1: press two pieces of a second carbon felt each having a thickness of 2 mm into the composite body by pressing one piece of the second carbon felt into the top surface of the composite body and one piece of the second carbon felt into the bottom surface of the composite body, causing the two pieces of the second carbon felt and the composite body to form an integrated structure;

G1: cool the integrated structure to obtain the composite conductive electrode.

Dimensions of the composite conductive electrode: 10cm×10cm×3cm (Length x Width x Thickness)

Properties of the composite conductive electrode manufactured according to aforementioned methods:

| Current (A) | Voltage (V) | Temperature (°C) | Volume electrical Resistivity ($\Omega \cdot mm2/m$) |
|---|---|---|---|
| 1A | 0.065V | 31°C | 0.0021 |
| 2A | 0.12V | 31.3°C | 0.00197 |
| 3A | 0.18V | 31.4°C | 0.00195 |
| 4A | 0.241V | 31.8°C | 0.00193 |
| 5A | 0.298V | 32°C | 0.00191 |
| 8A | 0.464V | 32.5°C | 0.00189 |
| 10A | 0.573V | 33.3°C | 0.00188 |
| 15A | 0.863V | 35°C | 0.0019 |

Example 2:

A1: thoroughly mix a plastic material (the plastic material selected is PP plastic pellets) and a conductive agent (the conductive agent selected is conductive graphite powder), the conductive agent is 10% of the mixture by weight, form the mixture into a conductive plastic sheet;

B1: place the conductive plastic sheet into a mold, heat the conductive plastic sheet to 100°C;

C1: place a first carbon felt of equal size as the conductive plastic sheet on top of the conductive plastic sheet, heat the conductive plastic sheet and the first carbon felt to 100°C;

D1: while maintaining temperature at around 100°C, apply pressure to the conductive plastic sheet and the first carbon felt, the pressure applied is 3 mpa, while maintaining constant pressure, turn over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying remove a composite body formed by the conductive plastic and the first carbon felt;

E1: use an engraving machine to trim flat a top surface and a bottom surface of the composite body, trimming depth is 0.7 mm;

F1: press two pieces of a second carbon felt each having a thickness of 10 mm into the composite body by pressing one piece of the second carbon felt into the top surface of the composite body and one piece of the second carbon felt into the bottom surface of the composite body, causing the two pieces of the second carbon felt and the composite body to form an integrated structure;
G1: cool the integrated structure to obtain the composite conductive electrode.

Dimensions of the composite conductive electrode: 10cm×10cm×2cm (Length x Width x Thickness)

Properties of the composite conductive electrode manufactured according to aforementioned methods:

| Current (A) | Voltage (V) | Temperature (°C) | Volume electrical Resistivity (Ω·mm2/m) |
|---|---|---|---|
| 1A | 0.036V | 31°C | 0.0018 |
| 2A | 0.068V | 31°C | 0.001745 |
| 3A | 0.103V | 31°C | 0.001749 |
| 4A | 0.14V | 31.2°C | 0.001728 |
| 5A | 0.173V | 31.3°C | 0.001741 |
| 8A | 0.275V | 31.5°C | 0.001713 |
| 10A | 0.343V | 31.8°C | 0.00171 |
| 15A | 0.534V | 32°C | 0.00172 |

Example 3:

A1: thoroughly mix a plastic material (the plastic material selected is PVC plastic pellets) and a conductive agent (the conductive agent selected is acetylene black), the conductive agent is 10% of the mixture by weight, form the mixture into a conductive plastic sheet;
B1: place the conductive plastic sheet into a mold, heat the conductive plastic sheet to 150°C;
C1: place a first carbon felt of equal size as the conductive plastic sheet on top of the conductive plastic sheet, heat the conductive plastic sheet and the first carbon felt to 150°C;
D1: while maintaining temperature at around 150°C, apply pressure to the conductive plastic sheet and the first carbon felt, the pressure applied is 2 mpa, while maintaining constant pressure, turn over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying remove a composite body formed by the conductive plastic and the first carbon felt;
E1: use an engraving machine to trim flat a top surface and a bottom surface of the composite body, trimming depth is 0.5 mm;
F1: press two pieces of a second carbon felt each having a thickness of 15 mm into the composite body by pressing one piece of the second carbon felt into the top surface of the composite body and one piece of the second carbon felt into the bottom surface of the composite body, causing the two pieces of the second carbon felt and the composite body to form an integrated structure;
G1: cool the integrated structure to obtain the composite conductive electrode.

Dimensions of the composite conductive electrode: 10cm×10cm×3cm (Length x Width x Thickness)

Properties of the composite conductive electrode manufactured according to aforementioned methods:

| Current (A) | Voltage (V) | Temperature (°C) | Volume electrical Resistivity ($\Omega \cdot mm2/m$) |
|---|---|---|---|
| 1A | 0.040V | 31°C | 0.002 |
| 2A | 0.078V | 31°C | 0.00195 |
| 3A | 0.117V | 31°C | 0.00195 |
| 4A | 0.154V | 31.2°C | 0.001925 |
| 5A | 0.191V | 31.3°C | 0.00191 |
| 8A | 0.298V | 31.5°C | 0.001863 |
| 10A | 0.368V | 31.8°C | 0.00184 |
| 15A | 0.561V | 32°C | 0.00187 |

Example 4:

A1: thoroughly mix plastic materials (the plastic materials selected are PE plastic pellets and PP plastic pellets, at a 1:1 ratio) and a conductive agent (the conductive agent selected is carbon nanotubes), the conductive agent is 10% of the mixture by weight, form the mixture into a conductive plastic sheet;

B1: place the conductive plastic sheet into a mold, heat the conductive plastic sheet to 200°C;

C1: place a first carbon felt of equal size as the conductive plastic sheet on top of the conductive plastic sheet, heat the conductive plastic sheet and the first carbon felt to 200°C;

D1: while maintaining temperature at around 200°C, apply pressure to the conductive plastic sheet and the first carbon felt, the pressure applied is 2 mpa, while maintaining constant pressure, turn over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying remove a composite body formed by the conductive plastic and the first carbon felt;

E1: use an engraving machine to trim flat a top surface and a bottom surface of the composite body, trimming depth is 0.3 mm;

F1: press two pieces of a second carbon felt each having a thickness of 20 mm into the composite body by pressing one piece of the second carbon felt into the top surface of the composite body and one piece of the second carbon felt into the bottom surface of the composite body, causing the two pieces of the second carbon felt and the composite body to form an integrated structure;

G1: cool the integrated structure to obtain the composite conductive electrode.

Dimensions of the composite conductive electrode: 10cm×10cm×2cm (Length x Width x Thickness)

Properties of the composite conductive electrode manufactured according to aforementioned methods:

| Current (A) | Voltage (V) | Temperature (°C) | Volume electrical Resistivity ($\Omega \cdot mm2/m$) |
|---|---|---|---|
| 1A | 0.020V | 31°C | 0.001 |
| 2A | 0.035V | 31°C | 0.00093 |
| 3A | 0.055V | 31°C | 0.00093 |
| 4A | 0.072V | 31.2°C | 0.00094 |
| 5A | 0.091V | 31.3°C | 0.00093 |
| 8A | 0.138V | 31.5°C | 0.000871 |
| 10A | 0.172V | 31.8°C | 0.000868 |

(continued)

| Current (A) | Voltage (V) | Temperature (°C) | Volume electrical Resistivity (Ω·mm2/m) |
|---|---|---|---|
| 15A | 0.263V | 32°C | 0.000878 |

Example 5:

A1: thoroughly mix plastic materials (the plastic materials selected are PE plastic pellets, PP plastic pellets and PVC plastic pellets, at a 1: 1: 1 ratio) and conductive agents (the conductive agents selected are conductive carbon black, graphite powder and acetylene black, at a 1: 1: 1 ratio), the conductive agents are 20% of the mixture by weight, form the mixture into a conductive plastic sheet;
B1: place the conductive plastic sheet into a mold, heat the conductive plastic sheet to 250°C;
C1: place a first carbon felt of equal size as the conductive plastic sheet on top of the conductive plastic sheet, heat the conductive plastic sheet and the first carbon felt to 250°C;
D1: while maintaining temperature at around 250°C, apply pressure to the conductive plastic sheet and the first carbon felt, the pressure applied is 1 mpa, while maintaining constant pressure, turn over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying remove a composite body formed by the conductive plastic and the first carbon felt;
E1: use an engraving machine to trim flat a top surface and a bottom surface of the composite body, trimming depth is 0.1 mm;
F1: press two pieces of a second carbon felt each having a thickness of 22 mm into the composite body by pressing one piece of the second carbon felt into the top surface of the composite body and one piece of the second carbon felt into the bottom surface of the composite body, causing the two pieces of the second carbon felt and the composite body to form an integrated structure;
G1: cool the integrated structure to obtain the composite conductive electrode.

Dimensions of the composite conductive electrode: 10cm×10cm×3cm (Length x Width x Thickness)

Properties of the composite conductive electrode manufactured according to aforementioned methods:

| Current (A) | Voltage (V) | Temperature (°C) | Volume electrical Resistivity (Ω·mm2/m) |
|---|---|---|---|
| 1A | 0.026V | 31°C | 0.00085 |
| 2A | 0.045V | 31°C | 0.000719 |
| 3A | 0.063V | 31°C | 0.00068 |
| 4A | 0.081V | 31.2°C | 0.00066 |
| 5A | 0.01V | 31.3°C | 0.000655 |
| 8A | 0.154V | 31.5°C | 0.000649 |
| 10A | 0.19V | 31.8°C | 0.000566 |
| 15A | 0.282V | 32°C | 0.000625 |

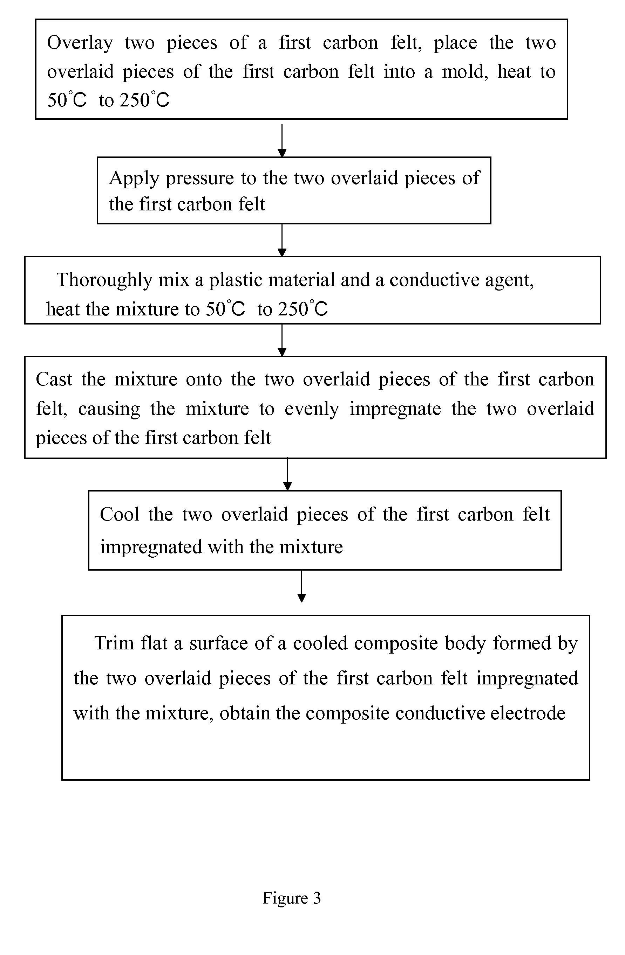

Figure 3 is a flow chart of a method for manufacturing a composite conductive electrode according to a second embodiment the present disclosure. As shown in Figure 3, the method comprises:

A2: overlaying two pieces of a first carbon felt, placing the two overlaid pieces of the first carbon felt into a mold, heating the two overlaid pieces of the first carbon felt to a temperature of 50°C to 250°C;
B2: applying pressure to the two overlaid pieces of the first carbon felt;

C2: thoroughly mixing a plastic material and a conductive agent forming a mixture, heating the mixture to a temperature of 50°C to 250°C;

D2: casting the mixture onto the two overlaid pieces of the first carbon felt, causing the mixture to evenly impregnate the two overlaid pieces of the first carbon felt;

E2: cool the two overlaid pieces of the first carbon felt impregnated with the mixture;

F2: trimming flat a surface of a cooled composite body formed by the two overlaid pieces of the first carbon felt impregnated with the mixture, obtaining the composite conductive electrode.

According to a preferred embodiment of the second embodiment of the present disclosure:

in step B2 the pressure applied is 1 mpa to 4 mpa;

in step C2 the conductive agent is 5 % to 40 % of the mixture by weight, the plastic material comprises one or more of PE plastic pellets, PP plastic pellets or PVC plastic pellets, proportion of each plastic material can be any ratio when selecting a combination of two or more plastic materials; the conductive agent comprises one or more of conductive carbon black, carbon nanotubes, graphite powder or acetylene black, proportion of each conductive agent can be any ratio when selecting a combination of two or more conductive agents;

step F2 comprises using a cutting machine or engraving machine to trim flat six surfaces of the composite body formed by the two overlaid pieces of the first carbon felt impregnated with the mixture, trimming depth is 0.1 mm to 1 mm.

Components of the composite conductive electrode manufactured according to the second embodiment include: a mixture of a plastic material and a conductive agent, and two overlaid pieces of a first carbon felt, wherein, the mixture evenly impregnates the two overlaid pieces of the first carbon felt, the mixture and the two overlaid pieces of the first carbon felt form an integrated structure.

Example 6:

A2: overlay two pieces of a first carbon felt, place the two overlaid pieces of the first carbon felt into a mold, heat the conductive plastic sheet to 50°C;

B2: apply pressure to the two overlaid pieces of the first carbon felt, the pressure applied is 4 mpa;

C2: thoroughly mix a plastic material (the plastic material selected is PE plastic pellets) and conductive agents (the conductive agents selected are conductive carbon black and carbon nanotubes, at a 4:1 ratio), wherein the conductive agents are 5 % of the mixture by weight, and heat the mixture to 250°C;

D2: cast the mixture onto the two overlaid pieces of the first carbon felt, causing the mixture to evenly impregnate the two overlaid pieces of the first carbon felt;

E2: cool the two overlaid pieces of the first carbon felt impregnated with the mixture;

F2: trim flat a surface of a cooled composite body formed by the two overlaid pieces of the first carbon felt impregnated with the mixture, trimming depth is 0.1 mm, obtain the composite conductive electrode.

Dimensions of the composite conductive electrode: 10cm×10cm×2.5cm (Length x Width x Thickness)

Properties of the composite conductive electrode manufactured according to aforementioned methods:

| Current (A) | Voltage (V) | Temperature (°C) | Volume electrical Resistivity ($\Omega \cdot mm2/m$) |
|---|---|---|---|
| 1A | 0.008V | 31°C | 0.000298 |
| 2A | 0.016V | 31°C | 0.000282 |
| 3A | 0.025V | 31°C | 0.000277 |
| 4A | 0.031V | 31°C | 0.000265 |
| 5A | 0.04V | 31°C | 0.000262 |

(continued)

| Current (A) | Voltage (V) | Temperature (°C) | Volume electrical Resistivity ($\Omega\cdot$mm2/m) |
|---|---|---|---|
| 8A | 0.06V | 31°C | 0.00025 |
| 10A | 0.075V | 31°C | 0.0002445 |
| 15A | 0.11V | 31.3°C | 0.000245 |

Example 7:

A2: overlay two pieces of a first carbon felt, place the two overlaid pieces of the first carbon felt into a mold, heat the two overlaid pieces of the first carbon felt to 100°C;

B2: apply pressure to the two overlaid pieces of the first carbon felt, the pressure applied is 3 mpa,

C2: thoroughly mix a plastic material (the plastic material selected is PVC plastic pellets) and conductive agents (the conductive agents selected are acetylene black and carbon nanotubes, at a 4:1 ratio), the conductive agent is 10% of the mixture by weight, heat the mixture to 200°C;

D2: cast the mixture onto the two overlaid pieces of the first carbon felt, causing the mixture to evenly impregnate the two overlaid pieces of the first carbon felt;

E2: cool the two overlaid pieces of the first carbon felt impregnated with the mixture;

F2: trim flat a surface of a cooled composite body formed by the two overlaid pieces of the first carbon felt impregnated with the mixture, trimming depth is 0.3 mm; obtain the composite conductive electrode.

Dimensions of the composite conductive electrode: 10cm×10cm×3cm (Length x Width x Thickness)

Properties of the composite conductive electrode manufactured according to aforementioned methods:

| Current (A) | Voltage (V) | Temperature (°C) | Volume electrical Resistivity ($\Omega\cdot$mm2/m) |
|---|---|---|---|
| 1A | 0.005V | 31°C | 0.00015 |
| 2A | 0.01V | 31°C | 0.00018 |
| 3A | 0.017V | 31°C | 0.00019 |
| 4A | 0.022V | 31°C | 0.000195 |
| 5A | 0.026V | 31°C | 0.000185 |
| 8A | 0.045V | 31°C | 0.000185 |
| 10A | 0.06V | 31°C | 0.0002 |
| 15A | 0.083V | 31°C | 0.000198 |

Example 8:

A2: overlay two pieces of a first carbon felt, place the two overlaid pieces of the first carbon felt into a mold, heat the two overlaid pieces of the first carbon felt to 150°C;

B2: apply pressure to the two overlaid pieces of the first carbon felt, the pressure applied is 2 mpa,

C2: thoroughly mix a plastic material (the plastic material selected is PP plastic pellets) and a conductive agent (the conductive agent selected is conductive graphite powder), the conductive agent is 15% of the mixture by weight, heat the mixture to 150°C;

D2: cast the mixture onto the two overlaid pieces of the first carbon felt, causing the mixture to evenly impregnate the two overlaid pieces of the first carbon felt;

E2: cool the two overlaid pieces of the first carbon felt impregnated with the mixture;

F2: trim flat a surface of a cooled composite body formed by the two overlaid pieces of the first carbon felt impregnated with the mixture, trimming depth is 0.5 mm; obtain the composite conductive electrode.

Dimensions of the composite conductive electrode: 10cm×10cm×3.5cm

(Length x Width x Thickness)

Properties of the composite conductive electrode manufactured according to aforementioned methods:

| Current (A) | Voltage (V) | Temperature (°C) | Volume electrical Resistivity ($\Omega \cdot mm2/m$) |
|---|---|---|---|
| 1A | 0.005V | 31°C | 0.000145 |
| 2A | 0.006V | 31°C | 0.0000873 |
| 3A | 0.009V | 31°C | 0.0000855 |
| 4A | 0.012V | 31°C | 0.0000857 |
| 5A | 0.015V | 31°C | 0.0000855 |
| 8A | 0.024V | 31°C | 0.0000855 |
| 10A | 0.029V | 31°C | 0.000083 |
| 15A | 0.044V | 31°C | 0.0000831 |

Example 9:

A2: overlay two pieces of a first carbon felt, place the two overlaid pieces of the first carbon felt into a mold, heat the two overlaid pieces of the first carbon felt to 200°C;

B2: apply pressure to the two overlaid pieces of the first carbon felt, the pressure applied is 2 mpa,

C2: thoroughly mix plastic materials (the plastic materials selected are PE plastic pellets, PP plastic pellets and PVC plastic pellets, at a 1: 1: 1 ratio) and conductive agents (the conductive agents selected are graphite powder and carbon nanotubes at a 2:1 ratio), the conductive agents are 20% of the mixture by weight, heat the mixture to 100°C;

D2: cast the mixture onto the two overlaid pieces of the first carbon felt, causing the mixture to evenly impregnate the two overlaid pieces of the first carbon felt;

E2: cool the two overlaid pieces of the first carbon felt impregnated with the mixture;

F2: trim flat a surface of a cooled composite body formed by the two overlaid pieces of the first carbon felt impregnated with the mixture, trimming depth is 0.5 mm; obtain the composite conductive electrode.

Dimensions of the composite conductive electrode: 10cm×10cm×2.4cm

(Length x Width x Thickness)

Properties of the composite conductive electrode manufactured according to aforementioned methods:

| Current (A) | Voltage (V) | Temperature (°C) | Volume electrical Resistivity ($\Omega \cdot mm2/m$) |
|---|---|---|---|
| 1A | 0.003V | 31°C | 0.00012 |
| 2A | 0.005V | 31°C | 0.000102 |
| 3A | 0.007V | 31°C | 0.000097 |
| 4A | 0.010V | 31°C | 0.000102 |
| 5A | 0.013V | 31°C | 0.000102 |

(continued)

| Current (A) | Voltage (V) | Temperature (°C) | Volume electrical Resistivity (Ω·mm2/m) |
|---|---|---|---|
| 8A | 0.020V | 31°C | 0.000102 |
| 10A | 0.024V | 31°C | 0.000102 |
| 15A | 0.036V | 31°C | 0.000101 |

Example 10:

A2: overlay two pieces of a first carbon felt, place the two overlaid pieces of the first carbon felt into a mold, heat the two overlaid pieces of the first carbon felt to 250°C;
B2: apply pressure to the two overlaid pieces of the first carbon felt, the pressure applied is 1 mpa,
C2: thoroughly mix plastic materials (the plastic materials selected are PE plastic pellets, PP plastic pellets and PVC plastic pellets, at a 1: 1: 1 ratio) and conductive agents (the conductive agents selected are conductive carbon black, graphite powder and carbon nanotubes at a 1: 1: 1 ratio), the conductive agents are 20% of the mixture by weight, heat the mixture to 50°C;
D2: cast the mixture onto the two overlaid pieces of the first carbon felt, causing the mixture to evenly impregnate the two overlaid pieces of the first carbon felt;
E2: cool the two overlaid pieces of the first carbon felt impregnated with the mixture;
F2: trim flat a surface of a cooled composite body formed by the two overlaid pieces of the first carbon felt impregnated with the mixture, trimming depth is 1 mm; obtain the composite conductive electrode.

Dimensions of the composite conductive electrode: 10cm×10cm×2.4cm

(Length x Width x Thickness)

Properties of the composite conductive electrode manufactured according to aforementioned methods:

| Current (A) | Voltage (V) | Temperature (°C) | Volume electrical Resistivity (Ω·mm2/m) |
|---|---|---|---|
| 1A | 0.003V | 30°C | 0.000123 |
| 2A | 0.005V | 30°C | 0.000102 |
| 3A | 0.006V | 30°C | 0.000083 |
| 4A | 0.009V | 30°C | 0.0009372 |
| 5A | 0.012V | 30°C | 0.0009372 |
| 8A | 0.015V | 30°C | 0.0009372 |
| 10A | 0.020V | 30°C | 0.0009372 |
| 15A | 0.033V | 30°C | 0.0009173 |

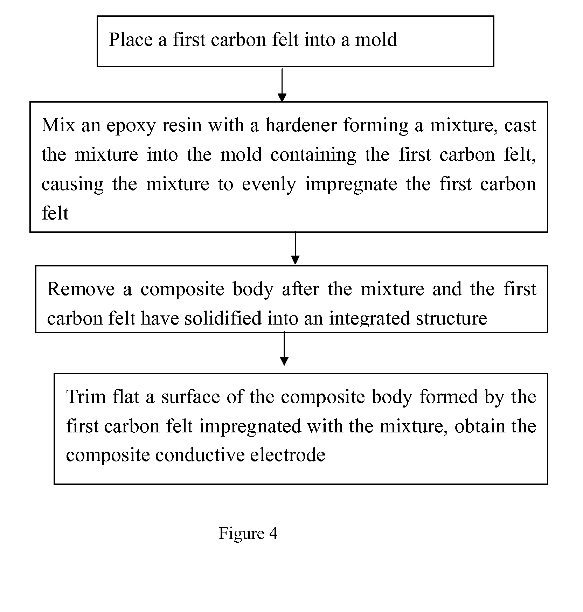

Figure 4 is a flow chart of a method for manufacturing a composite conductive electrode according to a third embodiment the present disclosure. As shown in Figure 4, According to a third embodiment of the present disclosure, the method comprises:

A3: placing a first carbon felt into a mold;
B3: mixing an epoxy resin with a hardener forming a mixture, casting the mixture into the mold containing the first carbon felt, causing the mixture to evenly impregnate the first carbon felt;
C3: removing a composite body after the mixture and the first carbon felt have solidified into an integrated structure;
D3: trimming flat a surface of the composite body formed by the first carbon felt impregnated with the mixture, obtaining the composite conductive electrode.

According to a preferred embodiment of the third embodiment of the present disclosure,
step A3 further comprises applying pressure to the first carbon felt in the mold, the pressure being applied is 1 mpa to 4 mpa; in step B3 the hardener is a commercially available commonly used hardener, the hardener may be 5% - 50% of the mixture by weight according to hardener product usage instructions.
step D3 further comprises using a cutting machine or engraving machine to trim flat six surfaces of the composite body formed by the first carbon felt impregnated with the mixture; trimming depth is 0.1 mm to 1 mm.
The present disclosure further provides a composite conductive electrode manufactured according to the method of the third embodiment, the composite conductive electrode comprises: a mixture of an epoxy resin and a hardener, and a first carbon felt, wherein, the mixture evenly impregnates the first carbon felt; the mixture and the first carbon felt form an integrated structure.

Example 11:

A3: place a first carbon felt into a mold, apply pressure of 1 mpa to the first carbon felt;
B3: mix an epoxy resin with a hardener forming a mixture, cast the mixture into the mold containing the first carbon felt, causing the mixture to evenly impregnate the first carbon felt, the hardener is a commercially available commonly used hardener, the hardener may be 5% - 50% of the mixture by weight according to hardener product usage instructions. In this example the hardener is 5% of the mixture by weight.
C3: remove a composite body after the mixture and the first carbon felt have solidified into an integrated structure;
D3: trim flat a surface of the composite body formed by the first carbon felt impregnated with the mixture, trimming depth is 0.1 mm, obtain the composite conductive electrode.

Dimensions of the composite conductive electrode: 10cm×10cm×2.5cm

(Length x Width x Thickness)

Properties of the composite conductive electrode manufactured according to aforementioned methods:

| Current (A) | Voltage (V) | Temperature (°C) | Volume electrical Resistivity ($\Omega \cdot mm2/m$) |
|---|---|---|---|
| 1A | 0.008V | 31.1°C | 0.000755 |
| 2A | 0.018V | 31.1°C | 0.00076 |
| 3A | 0.027V | 31.1°C | 0.00075 |
| 4A | 0.035V | 31.1°C | 0.000745 |
| 5A | 0.043V | 31.1°C | 0.000756 |
| 8A | 0.073V | 31.2°C | 0.000758 |
| 10A | 0.092V | 31.2°C | 0.000755 |
| 15A | 0.134V | 31.3°C | 0.000755 |

Example 12:

A3: place a first carbon felt into a mold, apply pressure of 2 mpa to the first carbon felt;
B3: mix an epoxy resin with a hardener forming a mixture, cast the mixture into the mold containing the first carbon felt, causing the mixture to evenly impregnate the first carbon felt, the hardener is a commercially available commonly used hardener, the hardener may be 5% - 50% of the mixture by weight according to hardener product usage instructions. In this example the hardener is 10% of the mixture by weight
C3: remove a composite body after the mixture and the first carbon felt have solidified into an integrated structure;
D3: trim flat a surface of the composite body formed by the first carbon felt impregnated with the mixture, trimming depth is 0.3 mm, obtain the composite conductive electrode.

Dimensions of the composite conductive electrode: 10cm×10cm×2.5cm (Length x Width x Thickness)

Properties of the composite conductive electrode manufactured according to aforementioned methods:

| Current (A) | Voltage (V) | Temperature (°C) | Volume electrical Resistivity (Ω·mm2/m) |
|---|---|---|---|
| 1A | 0.007V | 31.1°C | 0.000558 |
| 2A | 0.016V | 31.1°C | 0.000555 |
| 3A | 0.022V | 31.1°C | 0.00056 |
| 4A | 0.03V | 31.1°C | 0.000556 |
| 5A | 0.038V | 31.1°C | 0.000558 |
| 8A | 0.064V | 31.2°C | 0.000562 |
| 10A | 0.08V | 31.2°C | 0.000559 |
| 15A | 0.114V | 31.2°C | 0.000558 |

Example 13:

A3: place a first carbon felt into a mold, apply pressure of 3 mpa to the first carbon felt;
B3: mix an epoxy resin with a hardener forming a mixture, cast the mixture into the mold containing the first carbon felt, causing the mixture to evenly impregnate the first carbon felt, the hardener is a commercially available commonly used hardener, the hardener may be 5% - 50% of the mixture by weight according to hardener product usage instructions. In this example the hardener is 20% of the mixture by weight.
C3: remove a composite body after the mixture and the first carbon felt have solidified into an integrated structure;
D3: trim flat a surface of the composite body formed by the first carbon felt impregnated with the mixture, trimming depth is 0.5 mm, obtain the composite conductive electrode.

Dimensions of the composite conductive electrode: 10cm×10cm×2.5cm (Length x Width x Thickness)

Properties of the composite conductive electrode manufactured according to aforementioned methods:

| Current (A) | Voltage (V) | Temperature (°C) | Volume electrical Resistivity (Ω·mm2/m) |
|---|---|---|---|
| 1A | 0.005V | 31.2°C | 0.0004 |
| 2A | 0.012V | 31.2°C | 0.000398 |
| 3A | 0.018V | 31.2°C | 0.000399 |
| 4A | 0.023V | 31.2°C | 0.00041 |
| 5A | 0.03V | 31.2°C | 0.000411 |
| 8A | 0.05V | 31.2°C | 0.000401 |
| 10A | 0.063V | 31.2°C | 0.000403 |
| 15A | 0.092V | 31.2°C | 0.000405 |

Example 14:

A3: place a first carbon felt into a mold, apply pressure of 4 mpa to the first carbon felt;
B3: mix an epoxy resin with a hardener forming a mixture, cast the mixture into the mold containing the first carbon felt, causing the mixture to evenly impregnate the first carbon felt, the hardener is a commercially available commonly used hardener, the hardner may be 5% - 50% of the mixture by weight according to hardener product usage instructions. In this example the hardener is 30% of the mixture by weight.
C3: remove a composite body after the mixture and the first carbon felt have solidified into an integrated structure;
D3: trim flat a surface of the composite body formed by the first carbon felt impregnated with the mixture, trimming depth is 0.8 mm, obtain the composite conductive electrode.

Dimensions of the composite conductive electrode: 10cm×10cm×2.5cm

(Length x Width x Thickness)

Properties of the composite conductive electrode manufactured according to aforementioned methods:

| Current (A) | Voltage (V) | Temperature (°C) | Volume electrical Resistivity ($\Omega\cdot$mm2/m) |
|---|---|---|---|
| 1A | 0.004V | 31.2°C | 0.000355 |
| 2A | 0.011V | 31.2°C | 0.000353 |
| 3A | 0.018V | 31.2°C | 0.000357 |
| 4A | 0.022V | 31.2°C | 0.000358 |
| 5A | 0.029V | 31.2°C | 0.000351 |
| 8A | 0.045V | 31.2°C | 0.000352 |
| 10A | 0.059V | 31.2°C | 0.000355 |
| 15A | 0.089V | 31.2°C | 0.000356 |

Example 15:

A3: place a first carbon felt into a mold, apply pressure of 4 mpa to the first carbon felt;
B3: mix an epoxy resin with a hardener forming a mixture, cast the mixture into the mold containing the first carbon felt, causing the mixture to evenly impregnate the first carbon felt, the hardener is a commercially available commonly used hardener, the hardner may be 5% - 50% of the mixture by weight according to hardener product usage instructions. In this example the hardener is 50% of the mixture by weight.
C3: remove a composite body after the mixture and the first carbon felt have solidified into an integrated structure;
D3: trim flat a surface of the composite body formed by first carbon felt impregnated with the mixture, trimming depth is 1 mm; obtain the composite conductive electrode.

Dimensions of the composite conductive electrode: 10cm×10cm×2.5cm

(Length x Width x Thickness)

Properties of the composite conductive electrode manufactured according to aforementioned methods:

| Current (A) | Voltage (V) | Temperature (°C) | Volume electrical Resistivity ($\Omega\cdot$mm2/m) |
|---|---|---|---|
| 1A | 0.004V | 31.2°C | 0.00035 |

(continued)

| Current (A) | Voltage (V) | Temperature (°C) | Volume electrical Resistivity ($\Omega \cdot$mm2/m) |
|---|---|---|---|
| 2A | 0.012V | 31.2°C | 0.000349 |
| 3A | 0.018V | 31.2°C | 0.000348 |
| 4A | 0.022V | 31.2°C | 0.000349 |
| 5A | 0.028V | 31.2°C | 0.000352 |
| 8A | 0.047V | 31.2°C | 0.000351 |
| 10A | 0.058V | 31.2°C | 0.00035 |
| 15A | 0.087V | 31.2°C | 0.00035 |

Currently commercially available conductive plate properties
1. Shenyang plate properties: 10cm×10cm×1.6cm (Length x Width x Thickness), carbon content 40%.

| Current (A) | Voltage (V) | Temperature (°C) | Volume electrical Resistivity ($\Omega \cdot$mm2/m) |
|---|---|---|---|
| 1A | 0.038V | 31°C | 0.002375 |
| 2A | 0.066V | 31°C | 0.002063 |
| 3A | 0.094V | 31°C | 0.00196 |
| 4A | 0.122V | 31°C | 0.001906 |
| 5A | 0.15V | 31.2°C | 0.001875 |
| 8A | 0.234V | 32.4°C | 0.001828 |
| 10A | 0.291V | 33.8°C | 0.001818 |
| 15A | 0.432V | 36.4°C | 0.0018 |

2. Pangang plate properties: 10cm×10cm×1.6cm (Length x Width x Thickness), carbon content 20%.

| Current (A) | Voltage (V) | Temperature (°C) | Volume electrical Resistivity ($\Omega \cdot$mm2/m) |
|---|---|---|---|
| 1A | 0.035V | 31°C | 0.002188 |
| 2A | 0.061V | 31°C | 0.001906 |
| 3A | 0.086V | 31°C | 0.00179 |
| 4A | 0.112V | 31°C | 0.00175 |
| 5A | 0.138V | 31.2°C | 0.001725 |
| 8A | 0.211V | 32.1°C | 0.001648 |
| 10A | 0.258V | 33°C | 0.001613 |
| 15A | 0.381V | 36.6°C | 0.001588 |

South Central University plate properties: 10cm×10cm×4.6cm (Length x Width x Thickness), carbon content 40%.

| Current (A) | Voltage (V) | Temperature (°C) | Volume electrical Resistivity ($\Omega \cdot$mm2/m) |
|---|---|---|---|
| 1A | 0.026V | 31°C | 0.0005652 |
| 2A | 0.045V | 31°C | 0.0004891 |
| 3A | 0.065V | 31°C | 0.000471 |
| 4A | 0.084V | 31°C | 0.000456 |

(continued)

| Current (A) | Voltage (V) | Temperature (°C) | Volume electrical Resistivity ($\Omega \cdot mm2/m$) |
|---|---|---|---|
| 5A | 0.103V | 31°C | 0.000448 |
| 8A | 0.162V | 31.2°C | 0.000440 |
| 10A | 0.200V | 32°C | 0.000438 |
| 15A | 0.300V | 33°C | 0.000435 |

Compared to the aforementioned products, the composite conductive electrode manufactured according to the methods of the present disclosure has remarkably improved conductive properties, has a dense electrode structure, and has superior thermoplastic properties and temperature responses. In addition, the manufacturing process is simple and the production cost is low. Even after prolonged operation, the conductive electrode manufactured according to the methods of the present disclosure still maintains stable conductive properties and has reduced incidents of carbon fiber breakage The carbon felt inside the conductive plate in the conductive electrode is significantly less porous and is not easy to deform, thereby greatly prolonging the service life of the conductive electrode under stable conditions.

The above is intended only as a detailed description of the present disclosure in view of a particular preferred embodiment and does not limit other embodiments of the present disclosure. Any simple deduction or substitution that is within the framework of the present disclosure made by a person of ordinary skill in the art remains within the scope of protection of the present disclosure.

**Claims**

1.   A method for manufacturing a composite conductive electrode, comprising:

    selecting a carbon felt as a conductive substrate; and
    selecting a conductive medium as a connecting substance for spaces in the carbon felt so as to enhance conductive properties of the carbon felt.

2.   The method of claim 1, further comprising:

    selecting the carbon felt as a conductive substrate;
    selecting a conductive resin as the connecting substance for spaces in the carbon felt so as to enhance the conductive properties of the carbon felt,
    wherein the conductive resin comprises a conductive plastic material or an epoxy resin.

3.   The method of claim 2, further comprising:

    A1: forming a conductive plastic sheet by mixing a plastic material and a conductive agent;
    B1: placing the conductive plastic sheet into a mold, heating the conductive plastic sheet to a temperature of 50°C to 250°C;
    C1: placing a first carbon felt on the conductive plastic sheet, heating the conductive plastic sheet and the first carbon felt to a temperature of 50°C to 250°C;
    D1: while maintaining temperature at around 50°C to 250°C, applying pressure to the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying removing a composite body formed by the conductive plastic and the first carbon felt;
    E1: trimming flat a surface of the composite body;
    F1: pressing a second carbon felt into the composite body by pressing one piece of the second carbon felt into a top surface of the composite body and one piece of the second carbon felt into a bottom surface of the composite body, causing the two pieces of the second carbon felt and the composite body to form an integrated structure; and
    G1: cooling the integrated structure to obtain the composite conductive electrode.

4.   The method of claim 3, whereinstep A1 comprises thoroughly mixing the plastic material and the conductive agent forming a mixture, wherein the conductive agent is 5 % to 40 % of the mixture by weight,

wherein the plastic material comprises one or more of PE plastic pellets, PP plastic pellets or PVC plastic pellets, proportion of each plastic material can be any ratio when selecting a combination of two or more plastic materials, wherein the conductive agent comprises one or more of conductive carbon black, carbon nanotubes, graphite powder or acetylene black, proportion of each conductive agent can be any ratio when selecting a combination of two or more conductive agents,

wherein the conductive plastic sheet is formed by die-casting or injection molding,

wherein step C1 comprises placing the first carbon felt of equal size as the conductive plastic sheet on top of the conductive plastic sheet,

wherein in step D1 the pressure applied is 1mpa to 4 mpa using a press adapted for applying flat pressure, while maintaining constant pressure, turning over the mold containing the conductive plastic sheet and the first carbon felt, causing the first carbon felt to fully compress the conductive plastic sheet, and causing conductive plastic to be pressed into the first carbon felt, integrated and evenly distributed into the first carbon felt, after cooling and solidifying removing a composite body formed by the conductive plastic and the first carbon felt,

wherein step E1 comprises using a cutting machine or engraving machine to trim flat a top surface and a bottom surface of the composite body, trimming depth is 0.1 mm to 1 mm, and

wherein step F1 comprises pressing two pieces of the second carbon felt each having a thickness of 2 mm to 22 mm into the composite body by pressing one piece of the second carbon felt into the top surface of the composite body and one piece of the second carbon felt into the bottom surface of the composite body, causing the two pieces of the second carbon felt and the composite body to form an integrated structure.

5. A composite conductive electrode made by the method of claim 3, comprising:

    a composite body formed by a conductive plastic and a first carbon felt; and
    two pieces of a second carbon felt,
    wherein, each piece of the second carbon felt is pressed into the composite body, forming an integrated structure with the composite body.

6. The method of claim 2, further comprising:

    A2: overlaying two pieces of a first carbon felt, placing the two overlaid pieces of the first carbon felt into a mold, heating the two overlaid pieces of the first carbon felt to a temperature of 50°C to 250°C;
    B2: applying pressure to the two overlaid pieces of the first carbon felt;
    C2: thoroughly mixing the plastic material and the conductive agent forming a mixture, heating the mixture to a temperature of 50°C to 250°C;
    D2: casting the mixture onto the two overlaid pieces of the first carbon felt, causing the mixture to evenly impregnate the two overlaid pieces of the first carbon felt;
    E2: cooling the two overlaid pieces of the first carbon felt impregnated with the mixture; and
    F2: trimming flat a surface of a cooled composite body formed by the two overlaid pieces of the first carbon felt impregnated with the mixture, obtaining the composite conductive electrode.

7. The method of claim 6, wherein in step B2 the pressure applied is 1mpa to 4 mpa,

wherein in step C2 the conductive agent is 5% to 40% of the mixture by weight,

wherein the plastic material comprises one or more of PE plastic pellets, PP plastic pellets or PVC plastic pellets, proportion of each plastic material can be any ratio when selecting a combination of two or more plastic materials, wherein the conductive agent comprises one or more of conductive carbon black, carbon nanotubes, graphite powder, or acetylene black, proportion of each conductive agent can be any ratio when selecting a combination of two or more conductive agents. and

wherein step F2 comprises using a cutting machine or engraving machine to trim flat six surfaces of the composite body formed by the two overlaid pieces of the first carbon felt impregnated with the mixture, trimming depth is 0.1 mm to 1 mm.

8. A composite conductive electrode made by the method of claim 6, comprising:

    a mixture of a plastic material and a conductive agent; and
    two overlaid pieces of a first carbon felt,
    wherein, the mixture evenly impregnates the two overlaid pieces of the first carbon felt, the mixture and the two overlaid pieces of the first carbon felt form an integrated structure.

**9.** The method of claim 2, wherein the method comprises:

A3: placing the first carbon felt into a mold;
B3: mixing the epoxy resin with a hardener forming a mixture, casting the mixture into the mold containing the first carbon felt, causing the mixture to evenly impregnate the first carbon felt;
C3: removing a composite body after the mixture and the first carbon felt have solidified into an integrated structure; and
D3: trimming flat a surface of the composite body formed by the first carbon felt impregnated with the mixture, obtaining the composite conductive electrode.

**10.** A composite conductive electrode made by the method of claim 9, comprising:

a mixture of an epoxy resin and a hardener; and
a first carbon felt, wherein, the mixture evenly impregnates the first carbon felt,
wherein the mixture and the first carbon felt form an integrated structure.

Select a carbon felt as conductive substrate

↓

Select a conductive medium as connecting substance for spaces in the carbon felt

Figure 1

Form a conductive plastic sheet by mixing a plastic material and a conductive agent

↓

Place the conductive plastic sheet into a mold, heat to 50°C to 250°C

↓

Place a first carbon felt on the conductive plastic sheet, heat to 50°C to 250°C

↓

Apply pressure, causing the first carbon felt to fully compress the conductive plastic sheet, and causing conductive plastic to be pressed into the first carbon felt, integrated and evenly distributed into the first carbon felt, after cooling and solidifying remove a composite body formed by the conductive plastic and the first carbon felt

↓

Trim flat a surface of the composite body

↓

Press a second carbon felt into the composite body by pressing one piece of a second carbon felt into a top surface of the composite body and one piece of a second carbon felt into a bottom surface of the composite body, causing the two pieces of the second carbon felt and the composite body to form an integrated structure

↓

Cool the integrated structure to obtain the composite conductive electrode

Figure 2

```
┌─────────────────────────────────────────────────────────┐
│ Overlay two pieces of a first carbon felt, place the two │
│ overlaid pieces of the first carbon felt into a mold, heat to │
│ 50°C to 250°C                                            │
└─────────────────────────────────────────────────────────┘
                          │
                          ▼
      ┌──────────────────────────────────────────┐
      │ Apply pressure to the two overlaid pieces of │
      │ the first carbon felt                      │
      └──────────────────────────────────────────┘
                          │
                          ▼
┌─────────────────────────────────────────────────────────┐
│   Thoroughly mix a plastic material and a conductive agent, │
│ heat the mixture to 50°C to 250°C                        │
└─────────────────────────────────────────────────────────┘
                          │
                          ▼
┌─────────────────────────────────────────────────────────┐
│ Cast the mixture onto the two overlaid pieces of the first carbon │
│ felt, causing the mixture to evenly impregnate the two overlaid │
│ pieces of the first carbon felt                          │
└─────────────────────────────────────────────────────────┘
                          │
                          ▼
      ┌──────────────────────────────────────────┐
      │ Cool the two overlaid pieces of the first carbon felt │
      │ impregnated with the mixture               │
      └──────────────────────────────────────────┘
                          │
                          ▼
┌─────────────────────────────────────────────────────────┐
│   Trim flat a surface of a cooled composite body formed by │
│ the two overlaid pieces of the first carbon felt impregnated │
│ with the mixture, obtain the composite conductive electrode │
└─────────────────────────────────────────────────────────┘
```

Figure 3

Place a first carbon felt into a mold

Mix an epoxy resin with a hardener forming a mixture, cast the mixture into the mold containing the first carbon felt, causing the mixture to evenly impregnate the first carbon felt

Remove a composite body after the mixture and the first carbon felt have solidified into an integrated structure

Trim flat a surface of the composite body formed by the first carbon felt impregnated with the mixture, obtain the composite conductive electrode

Figure 4

## INTERNATIONAL SEARCH REPORT

| | International application No. |
| --- | --- |
| | **PCT/CN2012/076036** |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H01M 4/-, H01M 8/-, H01M 12/-

Documentation searched other than minimum documentation to the extent that such documents are included in the fields searched

Electronic data base consulted during the international search (name of data base and, where practicable, search terms used)

WPI, EPODOC, CPRS: carbon felt; redox, flow, battery, cell, electrode, carbon, graphite, conduct

**C. DOCUMENTS CONSIDERED TO BE RELEVANT**

| Category* | Citation of document, with indication, where appropriate, of the relevant passages | Relevant to claim No. |
| --- | --- | --- |
| X | CN 101335349 A (PANGANG GROUP RESEARCH INSTITUTE CO., LTD. et al.), 31 December 2008 (31.12.2008), description, page 3, line 5 to page 4, line 24 | 1-2 |
| A | | 3-10 |
| X | CN 101853942 A (XIA, Jiaqi et al.), 06 October 2010 (06.10.2010), description, paragraphs 0024-0048 | 1-2, 9-10 |
| X | CN 101877408 A (BYD CO., LTD.), 03 November 2010 (03.11.2010), description, paragraphs 0019-0021 | 1-2 |
| PX | CN 102324492 A (SHENZHEN JINFAN ENERGY TECHNOLOGY CO., LTD.), 18 January 2012 (18.01.2012), claims 1-10 | 1-10 |

☐ Further documents are listed in the continuation of Box C.　　☒ See patent family annex.

| | |
| --- | --- |
| *　　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
| --- | --- |
| 19 July 2012 (19.07.2012) | **23 August 2012 (23.08.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WU, Xuli** Telephone No.: (86-10) **62411542** |
| --- | --- |

Form PCT/ISA/210 (second sheet) (July 2009)

25

## INTERNATIONAL SEARCH REPORT
Information on patent family members

| | International application No. |
|---|---|
| | **PCT/CN2012/076036** |

| Patent Documents referred in the Report | Publication Date | Patent Family | Publication Date |
|---|---|---|---|
| CN 101335349 A | 31.12.2008 | CN 101335349 B | 30.06.2010 |
| CN 101853942 A | 06.10.2010 | None | |
| CN 101877408 A | 03.11.2010 | None | |
| CN 102324492 A | 18.01.2012 | None | |

Form PCT/ISA/210 (patent family annex) (July 2009)

## INTERNATIONAL SEARCH REPORT

International application No.

**PCT/CN2012/076036**

**A. CLASSIFICATION OF SUBJECT MATTER**

H01M 4/04 (2006.01) i

H01M 4/66 (2006.01) i

C08L 23/06 (2006.01) i

C08L 23/12 (2006.01) i

C08L 27/06 (2006.01) i

Form PCT/ISA/210 (extra sheet) (July 2009)

**EP 2 717 352 A1**

**Patent documents cited in the description**

- CN 2008103034837